# EUROPÄISCHE PATENTSCHRIFT

(11) **EP 0 620 042 B1**
(45) Veröffentlichungstag und Bekanntmachung des Hinweises auf die Patenterteilung: **29.12.1997**
(21) Anmeldenummer: 94104844.9
(22) Anmeldetag: 28.03.1994
(51) Int. Cl.: B01J 37/20, B01J 23/42, C01B 21/14

(54) **Hydrierungskatalysator auf der Basis eines mit feinteiligem Schwefel partiell vergifteten Platinmetalls**
Hydrogenation catalyst-based on metallic platinum partially poisoned by finely divided sulfur
Catalyseur d'hydrogénation à base de platine métallique partiellement empoisonné par du soufre finement divisé

(30) Priorität: 07.04.1993 DE 4311420
(43) Veröffentlichungstag der Anmeldung: 19.10.1994
(73) Patentinhaber: BASF Aktiengesellschaft, 67063 Ludwigshafen (DE)
(72) Erfinder: Weiss, Franz-Josef, Dr., D-67141 Neuhofen (DE); Fuchs, Hugo, Dr., D-67071 Ludwigshafen (DE); Neubauer, Gerald, Dr., D-69469 Weinheim (DE); Schneider, Heinz-Walter, Dr., D-67069 Ludwigshafen (DE)

(56) Entgegenhaltungen:
- EP-A- 0 329 628
- EP-A- 0 334 121
- FR-A- 1 550 453
- FR-A- 2 168 536

## Beschreibung

Die vorliegende Erfindung betrifft einen Hydrierungskatalysator, erhältlich durch im wesentlichen folgende Schritte:
(a) Behandeln eines Platinmetallsalzes mit feinteiligem Schwefel und
(b) anschließende Reduktion des Platinmetallsalzes zu metallischem Platinmetall.

Des weiteren betrifft die Erfindung ein Verfahren zur Herstellung des erfindungsgemäßen Hydrierungskatalysators, dessen Verwendung als Hydrierungskatalysator, insbesondere bei der Herstellung von Hydroxylammoniumsalzen sowie ein Verfahren zur Regenerierung von Hydrierungskatalysatoren.

Für die technische Durchführbarkeit von unter Katalyse ablaufenden Reaktionen ist der Aufwand für die Herstellung und Regenerierung, die Aktivität, Selektivität und die Lebensdauer des eingesetzten Katalysators von entscheidender Bedeutung. So auch bei der katalytischen Reduktion von Stickstoffmonoxid mit Wasserstoff zu Hydroxylammoniumsalzen. Bei diesem Verfahren verwendet man in der Regel platinmetallhaltige Hydrierungskatalysatoren.

Verfahren zur Herstellung von Hydroxylammoniumsalzen sind beispielsweise aus der DE-PS 956 038 der DE-A 4022851 und der EP-A 334 121 bekannt. Die in diesen Dokumenten verwendeten Katalysatoren werden durch Fällen von Platin auf suspendierten Graphitträgern gewünschtenfalls unter Zusatz von vergiftenden Mitteln wie Schwefel-, Selen-, Arsen- oder Tellurverbindungen erhalten. Die Nachteile dieser Verfahren liegen zum einen in einem zu schnellen Abbau der Aktivität und der Selektivität, und zum anderen in einem aufwendigen und umweltbelastenden Herstellverfahren.

So ist es bislang üblich gewesen, vor dem Zusetzen des Katalysatorgifts die platinmetallsalzhaltige Reaktionsmischung zu puffern, beispielsweise mit Natriumacetat. Der nach der Reaktion mit organischen Stoffen verunreinigte Puffer belastet das Abwasser und ist teuer zu entsorgen. Des weiteren ist eine Pufferung, insbesondere bei Verwendung von Natriumdithionit als Lieferant für Schwefel als Katalysatorgift, wegen der Einstellung des hierfür erforderlichen Redoxpotentials aufwendig.

Ferner ist das in der DE-PS 956 038 genannte Natriumdithionit gegenüber Luftsauerstoff instabil und muß unter bestimmten Sicherheitsvorkehrungen (Vermeidung von Erwärmung über 50°C und Funkenflug, Lagerung in kühler und trockener Atmosphäre) gehandhabt werden.

Andere zur partiellen Vergiftung des Katalysators bislang vorgeschlagene Schwefeldonatoren haben ebenfalls entscheidende Nachteile: Thioharnstoff gilt als cancerogen, Natriumthiosulfat und Natriumsulfit sind zersetzlich, und Natriumsulfid gilt als toxisch. Darüber hinaus führen diese Vergiftungsmittel zu keinen befriedigenden Katalysatoreigenschaften.

Aufgabe der vorliegenden Erfindung war es daher, Hydrierungskatalysatoren zur Verfügung zu stellen, die die oben genannten Nachteile nicht aufweisen. Insbesondere sollte die Herstellung von Hydrierungskatalysatoren vereinfacht, die Mengen an Abfallprodukten reduziert und die Verwendung leicht zersetzlicher und toxischer Substanzen zur partiellen Vergiftung vermieden werden.

Demgemäß wurden die eingangs definierten Hydrierungskatalysatoren gefunden.

Des weiteren wurde ein Verfahren zur Herstellung und Regenerierung der erfindungsgemäßen Hydrierungskatalysatoren sowie deren Verwendung zur Herstellung von Hydroxylammoniumsalzen gefunden.

Die erfindungsgemäßen Hydrierungskatalysatoren erhält man durch die Behandlung eines Platinmetallsalzes mit feinteiligem Schwefel und anschließende Reduktion des so behandelten Platinmetallsalzes zu metallischem Platinmetall.

Als Platinmetallsalze kommen prinzipiell alle zur Hydrierung geeigneten Platinmetallsalze, z.B. Salze von Palladium, Platin, Rhodium, Iridium und Ruthenium, vorzugsweise Palladium und Platin, besonders bevorzugt Platin, in Betracht. Insbesondere sind die wasserlöslichen Salze dieser Metalle wie die Halogenide, Nitrate und Sulfate besonders gut geeignet. Beispielhaft seien genannt:
- Platin(IV)-Verbindungen wie Hexachloroplatinsäure und ihre Alkalimetall- und Ammoniumsalze, Tetrachloroplatinat oder Tetrachlorodihydroxyplatinsäure;
- Platin(II)-Verbindungen wie Tetrachloroplatinsäure und ihre Alkalimetallsalze oder Platin(II)-chlorid;
- Palladium(II)-Verbindungen wie Hexachloropalladiumsäure und ihre Salze oder Palladium(II)-chlorid.

Prinzipiell kann man auch Mischungen von im wesentlichen Platinmetallen oder Platinmetallsalzen mit weiteren Metallsalzen, beispielsweise Arsen-, Antimon-, Selen- oder Tellursalzen, einsetzen.

Als zur partiellen Vergiftung dienender Schwefel setzt man erfindungsgemäß feinteiligen Schwefel, beispielsweise die handelsübliche "Schwefelblüte", ein. Bevorzugt verwendet man Schwefel mit einer Teilchengröße kleiner als 500 µm, bevorzugt kleiner als 50 µm besonders bevorzugt mit einer Teilchengrößenverteilung, in der 20 % der Teilchen kleiner als 1 µm, 50% der Teilchen kleiner als 5 µm und 90% der Teilchen kleiner als 10 µm sind. (Die Teilchengröße wurde mit einem MALVERN Mastersizer bestimmt, siehe Beispielteil.) Geeigneter Schwefel ist beispielsweise als Netzschwefel "Kumulus WG®" im Handel (BASF) oder mit an sich bekannten Methoden, insbesondere Sieben, aus beispielsweise Schwefelblüte oder kleingemahlenem Schwefel erhältlich.

In der Regel behandelt man das Platinmetallsalz mit dem feinteiligen Schwefel in wäßriger Lösung, indem man die wäßrige Platinmetallsalzlösung mit dem feinteiligen Schwefel in Kontakt bringt. Man kann den Schwefel auch als kolloidale Schwefellösung (s. Jander-Blasius, Einführung in das anorganisch-chemische Praktikum, 5. Auflage, 1964, S. 415) einsetzen. Bevorzugt gibt man den Schwefel in Form einer wäßrigen Suspension zu.

Prinzipiell kann man anstelle des bevorzugten Lösungsmittels Wasser auch andere Lösungsmittel einsetzen, oder dem Wasser solche zusetzen. Der Schwefel kann auch als trockenes Pulver in die Lösung des Platinmetallsalzes eingetragen werden.

Des weiteren kann man der Reaktionsmischung die Löslichkeit bzw. Dispergierbarkeit der Ausgangsverbindungen verbessernde Stoffe zusetzen. Insbesondere eignen sich für diesen Zweck nach den bisherigen Beobachtungen alle gängigen Tenside, um die Löslichkeit und Benetzung des Schwefels zu verbessern.

Geeignete Tenside, die auch als Dispergiermittel bezeichnet werden, sind beispielsweise aus Ullmanns Encyklopädie der technischen Chemie, 4. Auflage, Band 23, Verlag Chemie, Weinheim, 1983, S. 31-39, zu entnehmen. Als Beispiele seien genannt:

Polyacrylate, Polyvinylsulfonate, Polyvinylpyrrolidon, TAMOL® (BASF), Schaeffer-Salz sowie Ligninsulfonate.

In einer besonders bevorzugten Ausführungsform setzt man als Tensid Ligninsulfonate (bekannt z.B. aus Ullmann, Encyclopädie der techn. Chemie, 4. Auflage, Bd. 16, S.253 ff., Verlag Chemie, 1978), vorzugsweise Alkalimetalligninsulfonate wie Natrium- und Kaliumligninsulfonat ein, da sie beim Waschen des fertigen Katalysators mit dem Waschwasser leicht entfernt werden können und sie wegen ihrer leichten Abbaubarkeit keine Umweltbelastung darstellen.

Die Tenside setzt man im allgemeinen dem Reaktionsgemisch vor der Zugabe des Schwefels zum Platinmetallsalz oder vorteilhaft der wäßrigen Schwefel-Suspension zu.

Das Gewichtsverhältnis von Tensid zu Schwefel wählt man in der Regel im Bereich von 0,1 bis 50, bevorzugt von 1 bis 15 Gew.-%. Mehr als 50 Gew.-% Tensid bewirken nach den bisherigen Beobachtungen keine wesentlichen Verbesserungen der Löslichkeit des Schwefels, Mengen unter 0,1 Gew.-% bewirken im allgemeinen noch keine deutlich sichtbare Verbesserung.

Die Temperatur während der Behandlung des Platinmetallsalzes mit dem feinteiligen Schwefel wählt man üblicherweise im Bereich von 20 bis 95°C, bevorzugt von 40 bis 95°C, besonders bevorzugt von 50 bis 85°C.

Den pH-Wert während der Behandlung des Platinmetallsalzes mit dem feinteiligen Schwefel wählt man in der Regel im Bereich von 1,5 bis 11,5, bevorzugt von 2,5 bis 8,5, besonders bevorzugt 4,5 bis 8,5, ganz besonders bevorzugt von 7,0 bis 7,5.

Die Dauer der Behandlung des Platinmetallsalzes mit dem feinteiligen Schwefel, d.h. der Zeitraum von der Zugabe des feinteiligen Schwefels bis zur Zugabe des Reduktionsmittels, wählt man in der Regel im Bereich von 0,5 bis 60 min, vorzugsweise von 2 bis 15 min. Eine kürzere Behandlung als 0,5 min führt im allgemeinen zu einer zu geringen Vergiftung des Katalysators, eine längere Behandlung als 60 min hat nach den bisherigen Erfahrungen keine Vorteile.

Das Molverhältnis von Platinmetall zu Schwefel wählt man in der Regel im Bereich von 90 bis 10, vorzugsweise von 75 bis 35 Mol-%.

Im Anschluß an die partielle Vergiftung mit Schwefel reduziert man das Platinmetallsalz zu metallischem Platinmetall, indem man zweckmäßig dem nach der Behandlung des Platinmetallsalzes mit feinteiligem Schwefel erhaltenen Reaktionsgemisch ein Reduktionsmittel zuführt.

Als Reduktionsmittel kommen üblicherweise alle bekannten Reduktionsmittel für Platinmetallsalze zum Platinmetall in Betracht, z.B. Hydrazin, Formaldehyd, Ameisensäure oder ein Alkalimetall- oder Erdalkalimetallformiat wie Natrium-, Kalium- und Calciumformiat, besonders bevorzugt Ameisensäure.

Das Molverhältnis von Platinmetall zu Reduktionsmittel wählt man in der Regel im Bereich von 0,5 bis 100, bevorzugt von 5 bis 85 Mol-%.

Die Temperatur während der Reduktion wählt man üblicherweise im Bereich von 20 bis 95°C, bevorzugt von 40 bis 95°C, besonders bevorzugt von 50 bis 85°C.

Der pH-Wert bei der Reduktion hängt im wesentlichen von der Menge und Art des Reduktionsmittels ab. Beispielsweise wählt man den pH-Wert bei Verwendung von Ameisensäure in der Regel im Bereich von 0,5 bis 3,5, bevorzugt von 1,0 bis 2,5.

Nach beendeter Reduktion arbeitet man den Katalysator in der Regel wie üblich auf, beispielsweise indem man ihn vom Reaktionsgemisch abfiltriert und zweckmäßig mit Wasser wäscht.

In einer bevorzugten Ausführungsform führt man die Reduktion und gewünschtenfalls die Behandlung mit feinteiligem Schwefel in Gegenwart eines Katalysatorträgers wie Graphit oder Aktivkohle, bevorzugt Graphit, durch. Besonders bevorzugt versetzt man das Platinmetallsalz vor der Behandlung mit feinteiligem Schwefel mit feinteiligem Graphit, in der Regel mit einer Teilchengröße im Bereich von 0,1 bis 1 000, bevorzugt von 0,1 bis 300 µm, besonders bevorzugt von 5 bis 100 µm.

Das Molverhältnis von Kohlenstoff (bzw. Graphit oder Aktivkohle) zu Platinmetall wählt man im allgemeinen im Bereich von 99,99 bis 10 Mol-%, bevorzugt 99,99 bis 30 Mol-%, insbesondere wenn es sich um Platin handelt vorzugsweise von 99,99 bis 90 Mol-%, besonders bevorzugt von 99,98 bis 95,0 Mol-%.

Die nach dem erfindungsgemäßen Verfahren erhaltenen Katalysatoren eignen sich nach den bisherigen Beobachtungen sowohl zur Hydrierung von organischen als auch von anorganischen Verbindungen.

Bevorzugt setzt man die erfindungsgemäßen Katalysatoren für die Hydrierung von olefinisch oder acetylenisch ungesättigten Verbindungen, weiterhin zur Hydrierung von Carbonsäuren, Aldehyden oder Ketonen zu den entsprechenden Alkoholen oder von Nitrilen zu den entsprechenden Aminen ein. Des weiteren eignen sich die erfindungsgemäßen Katalysatoren zur Hydrierung anorganischer Stoffe wie Sauerstoff, insbesondere jedoch zur Herstellung von Hydroxylammoniumsalzen durch Hydrieren von Stickstoffmonoxid in wäßrigen Mineralsäuren.

Bei der Herstellung von Hydroxylammoniumsalzen hält man in der Regel ein Molverhältnis von Wasserstoff zu Stickstoffmonoxid von 1,5:1 bis 6:1, bevorzugt von 3:1 bis 5:1, ein. Besonders gute Ergebnisse erhält man nach den bisherigen Beobachtungen, wenn man darauf achtet, daß in der Reaktionszone ein Molverhältnis von Wasserstoff zu Stickstoffmonoxid von 3,5:1 bis 5:1 aufrecht erhalten wird.

Vorteilhaft verwendet man als Säuren starke Mineralsäuren wie Salpetersäure, Schwefelsäure oder Phosphorsäure oder aliphatische C₁-C₅-Monocarbonsäuren wie Ameisen-, Essig-, Propion-, Butter- und Valeriansäure, bevorzugt Ameisen- und Essigsäure. Geeignet sind im allgemeinen auch saure Salze wie Ammoniumbisulfat. In der Regel verwendet man 4 bis 6 normale wäßrige Säuren und läßt üblicherweise im Verlauf der Reaktion die Säurekonzentration nicht unter 0,2 normal absinken.

Die Hydrierung von Stickstoffmonoxid führt man im allgemeinen bei einer Temperatur im Bereich von 30 bis 80, vorzugsweise von 35 bis 60°C, aus. Des weiteren wählt man den Druck während der Hydrierung üblicherweise im Bereich von 1 bis 30, vorzugsweise 1,5 bis 20 bar (absolut).

Das Verhältnis von Mineralsäure zu Katalysator hängt im wesentlichen vom Platinmetall und vom Reaktordruck ab und liegt im Falle von Platin im allgemeinen im Bereich von 10 bis 100, vorzugsweise 30 bis 80 g Platin-Graphit-Katalysator je Liter Mineralsäure.

In einer weiteren bevorzugten Ausführungsform, insbesondere bei der Herstellung von Hydroxylammoniumsalzen, behandelt man den Katalysator vor der Hydrierung in saurer Lösung, zweckmäßig in der Mineralsäure, in der die Hydrierung durchgeführt werden soll, mit Wasserstoff ("Aktivierung").

Verbrauchte Platinmetall-Katalysatoren kann man mit Hilfe des erfindungsgemäßen Verfahrens regenerieren, indem man das Platinmetall des Katalysators üblicherweise mittels einer Säure oder einem Säuregemisch in Lösung bringt und gegebenenfalls unlösliche Bestandteile abtrennt. Anschließend neutralisiert man die erhaltene Platinmetallsalzlösung, und behandelt dann das Platinmetallsalz nach dem oben beschriebenen erfindungsgemäßen Verfahren, indem es mit feinteiligem Schwefel versetzt, und anschließend das so behandelte Platinmetallsalz mit einem Reduktionsmittel reduziert wird, wobei man vor, bei oder nach der Behandlung mit feinteiligem Schwefel gewünschtenfalls ein Trägermaterial zusetzen kann.

Die erfindungsgemäßen Katalysatoren sind nach den bisherigen Beobachtungen bekannten Katalysatoren für den gleichen Zweck hinsichtlich Aktivität, Selektivität und Standzeit überlegen. Das erfindungsgemäße Verfahren zur Herstellung und zur Regenerierung von Hydrierungskatalysatoren hat gegenüber bekannten Verfahren den Vorteil, daß es einfacher auszuführen ist, und gleichzeitig die Mengen an Abfallprodukten reduziert und die Verwendung leicht zersetzlicher und toxischer Substanzen zur partiellen Vergiftung vermeidet.

### Beispiele

### Hydrierungskatalysator auf der Basis eines mit feinteiligem Schwefel partiell vergifteten Platinmetalls

Die Teilchengröße wurde mit einem MALVERN Mastersizer (s. auch Verfahrenstechnik 24 (1990) S. 36ff) bestimmt. Gemessen wurde die Fraunhofer-Beugung bei einer Wellenlänge von 633 nm. Durch Wahl einer Vorsatzlinse mit einer Brennweite von f = 300 mm wurde die Teilchengrößenverteilung in einem Bereich von 1 bis 600 µm bestimmt.

Zur Messung wurde eine Spatelspitze des zu untersuchenden Pulvers in einen Liter einer 0,1 gew.-%igen wäßrigen Nekanil® 910-Lösung (BASF AG; Nekanil® 910 ist ein mit 9 bis 10 Mol Ethylenoxid umgesetztes Nonylphenol; Eigenschaften: wasserklare, viskose Flüssigkeit; nichtionisch, Dichte bei 20°C: 1,04 g/cm³; Stockpunkt: unter -10°C; pH-Wert einer 1 gew.-%igen Lösung: 6,5 bis 8,5) gegeben. Vor der Messung wurde die so erhaltene zu untersuchende Mischung 1 min einer Ultraschall-Behandlung unterzogen.

### Beispiel 1

640 g (als Trockensubstanz berechnet) eines feinteiligen Graphitträgers (Teilchengröße im Bereich von 0,1 bis 300 µm) wurden in 500 ml Wasser und 100 ml Königswasser suspendiert, 0,5 Gew.-% Platin als Hexachloroplatinwasserstoffsäure-Hexahydrat zugegeben und über Nacht bei 80°C gerührt. Am nächsten Tag wurde die Suspension mit 400 ml Wasser verdünnt, auf 30°C abgekühlt und dann mit Soda auf einen pH-Wert von 7,5 eingestellt. Danach wurden 150 mg in 50 ml Wasser suspendierter feinteiliger Elementarschwefel (Partikelgrößenverteilung: 20 % <1 µm; 50 % <5 µm; 90 % <10 µm) dem Reaktionsgemisch zugegeben. Nach 10 Minuten wurden dann 100 ml 99 gew.-%ige Ameisensäure in die Reaktionsmischung hinzugefügt.

50 g des so behandelten Katalysators wurden in 1250 ml 20 gew.-%iger H₂SO₄ suspendiert und mit H₂ bei 40°C behandelt.

Anschließend wurden 121 l/h eines Gemisches aus 67,7 Vol.-% H₂ (99,95 %ig) und 32,3 Vol.-% NO (99,6 %ig) in die Suspension eingeleitet.

Nach Einleitung von insgesamt 423 l des obigen Gasgemisches wurden 1342 ml einer Lösung der folgenden Zusammensetzung erhalten:
- 18,5: g/l H₂SO₄
- 108,1: g/l NH₂OH (als (NH₃OH)₂SO₄)
- 7,3: g/l NH₃ (als (NH₄)₂SO₄)

Die Gesamtabgasmenge betrug 91,6 l folgender Zusammensetzung:
- 76,7: Vol.-% H₂
- 19,5: Vol.-% NO
- 2,8: Vol.-% N₂O

Aus diesen Ergebnissen errechnen sich folgende Werte für die Selektivität und Raum-Zeit-Ausbeute:

### Selektivität:

- 85,2: % zu NH₂OH
- 10,1: % zu NH₃
- 4,7: % zu N₂O

### Raum-Zeit-Ausbeute:

- 1,12: Mol/1_{RR} fl.·h, bezogen auf NO-Umsatz (Verbrauch)
- 0,96: Mol/1_{RR} fl.·h, bezogen auf gebildetes NH₂OH, wobei
Mol/1_{RR} fl.·h Mol pro Liter flüssigen Reaktionsraum x Stunde bedeutet.

### Beispiel 2

Eine Suspension aus 640 g (als Trockensubstanz berechnet) eines feinteiligen Graphitträgers (Teilchengröße im Bereich von 0,1 bis 300 µm), 500 ml Wasser, 100 ml Königswasser, 0,5 Gew.-% Platin als Hexachloroplatinwasserstoffsäure-Hexahydrat wurde über Nacht bei 80°C gerührt. Am nächsten Tag wurde die Suspension mit 400 ml Wasser verdünnt, auf 30°C abgekühlt und dann mit Soda auf einen pH-Wert von 7,5 eingestellt. Danach wurde eine Suspension von 150 mg feinteiliger Elementarschwefel (Partikelgrößenverteilung: 20 % <1 µm; 50 % <5 µm; 90 % <10 µm) 20 mg Natriumligninsulfonat und 50 ml Wasser zugegeben. Nach 10 Minuten wurden dann 100 ml 99 gew.-%ige Ameisensäure der Reaktionsmischung hinzugefügt.

50 g des so behandelten Katalysators wurden in 1250 ml 20 gew.-%iger H₂SO₄ suspendiert und mit H₂ bei 40°C behandelt.

Anschließend wurden 121 l/h eines Gemisches aus 68,0 Vol.-% H₂ (99,95 %ig) und 32,0 Vol.-% NO (99,6 %ig) in die Suspension eingeleitet.

Nach Einleitung von insgesamt 406 l des obigen Gasgemisches wurden 1340 ml einer Lösung der folgenden Zusammensetzung erhalten:
- 17,2: g/l H₂SO₄
- 193,5: g/l NH₂OH (als (NH₃OH)₂SO₄)
- 13,3: g/l NH₃ (als (NH₄)₂SO₄)

Die Gesamtabgasmenge betrug 77,7 l folgender Zusammensetzung:
- 76,1: Vol.-% H₂
- 19,6: Vol.-% NO
- 3,0: Vol.-% N₂O

Aus diesen Ergebnissen errechnen sich folgende Werte für die Selektivität und Raum-Zeit-Ausbeute:

### Selektivität:

- 76,1: % zu NH₂OH
- 19,5: % zu NH₃
- 4,4: % zu N₂O

### Raum-Zeit-Ausbeute:

- 1,18: Mol/1_{RR} fl.·h, bezogen auf NO-Umsatz (Verbrauch)
- 0,90: Mol/1_{RR} fl.·h, bezogen auf gebildetes NH₂OH.

### Vergleichsbeispiel

Eine Suspension aus 640 g (als Trockensubstanz berechnet) eines feinteiligen Graphitträgers (Teilchengröße im Bereich von 0,1 bis 300 µm), 500 ml Wasser, 100 ml Königswasser, 0,5 Gew.-% Platin als Hexachloroplatinwasserstoffsäure-Hexahydrat wurde über Nacht bei 80°C gerührt. Am nächsten Tag wurde die Suspension mit 400 ml Wasser verdünnt, auf 30°C abgekühlt und dann mit Soda auf einen pH-Wert von 3,0 eingestellt. Anschließend wurde als Puffersubstanz 80 ml einer 40 gew.-%igen Natriumacetat-Lösung in die Reaktionsmischung gegeben. Danach wurden 15 ml einer 5 gew.-%igen Na₂S₂O₄-Lösung zugesetzt bis ein Redoxpotential von 430 mV erreicht war. Hiernach wurden 100 ml 99 gew.-%ige Ameisensäure der Reaktionsmischung hinzugefügt. (Als Redoxelektrode diente eine Pt/Ag/AgCl-Elektrode (Fa. Metrohm, Herisau). Zur Kalibrierung wurde eine Redox-Kalibrierlösung für eine Pt/Ag/AgCl-Elektrode (Schott-Geräte GmbH, Hofheim) mit einem Redoxpotential von +475 mV bei 20°C eingesetzt.

50 g des so behandelten Katalysators wurden in 1250 ml 20 gew.-%iger H₂SO₄ suspendiert und mit H₂ bei 40°C behandelt.

Anschließend wurden 100 l/h eines Gemisches aus 70,0 Vol.-% H₂ (99,95 %ig) und 30,0 Vol.-% NO (99,6 %ig) in die Suspension eingeleitet.

Nach Einleitung von insgesamt 300 l des obigen Gasgemisches wurden 1338 ml einer Lösung der folgenden Zusammensetzung erhalten:
- 84,7: g/l H₂SO₄
- 55,5: g/l NH₂OH (als (NH₃OH)₂SO₄)
- 13,2: g/l NH₃ (als (NH₄)₂SO₄)

Die Gesamtabgasmenge betrug 59,0 l folgender Zusammensetzung:
- 77,0: Vol.-% H₂
- 15,4: Vol.-% NO
- 8,6: Vol.-% N₂O

Aus diesen Ergebnissen errechnen sich folgende Werte für die Selektivität und Raum-Zeit-Ausbeute:

### Selektivität:

- 60,0: % zu NH₂OH
- 27,8: % zu NH₃
- 12,2: % zu N₂O

### Raum-Zeit-Ausbeute:

- 0,99: Mol/1_{RR} fl.·h, bezogen auf NO-Umsatz (Verbrauch)
- 0,59: Mol/1_{RR} fl.·h, bezogen auf gebildetes NH₂OH.

## Patentansprüche

1. Hydrierungskatalysator, erhältlich durch im wesentlichen folgende Schritte:
(a) Behandeln eines Platinmetallsalzes mit feinteiligem Schwefel und
(b) anschließende Reduktion des Platinmetallsalzes zu metallischem Platinmetall.

2. Hydrierungskatalysator nach Anspruch 1, dadurch gekennzeichnet, daß die Teilchengröße des feinteiligen Schwefels kleiner als 500 µm beträgt.

3. Hydrierungskatalysator gemäß Anspruch 1 oder 2, dadurch gekennzeichnet, daß man die Reduktion in Gegenwart eines Katalysatorträgermaterials durchführt.

4. Hydrierungskatalysator gemäß den Ansprüchen 1 bis 3, dadurch gekennzeichnet, daß man die Verfahrensschritte in wäßrigem Medium durchführt.

5. Hydrierungskatalysator gemäß den Ansprüchen 1 bis 4, dadurch gekennzeichnet, daß man die Behandlung mit feinteiligem Schwefel in Gegenwart eines Tensids ausführt.

6. Hydrierungskatalysator nach den Ansprüchen 1 bis 5, dadurch gekennzeichnet, daß der Katalysator einen Platinmetallgehalt im Bereich von 0,01 bis 10 Gew.-% und einen Schwefelgehalt im Bereich von 0,005 bis 0,5 Gew.-% aufweist.

7. Verfahren zur Herstellung eines Hydrierungskatalysators gemäß Anspruch 1, dadurch gekennzeichnet, daß man im wesentlichen
(a) ein Platinmetallsalz mit feinteiligem Schwefel behandelt und
(b) anschließend das Platinmetallsalz zu metallischem Platinmetall reduziert.

8. Verwendung der Hydrierungskatalysatoren gemäß den Ansprüchen 1 bis 6 zur Herstellung von Hydroxylammoniumsalzen.

9. Verfahren zur Herstellung von Hydroxylammoniumsalzen durch Reduktion von Stickstoffmonoxid mit Wasserstoff in Gegenwart eines Hydrierungskatalysators, dadurch gekennzeichnet, daß man den Hydrierungskatalysator durch im wesentlichen
(a) Behandeln eines Platinmetallsalzes mit feinteiligem Schwefel und
(b) anschließende Reduktion des Platinmetallsalzes zu metallischem Platinmetall
herstellt.

10. Verfahren zur Regenerierung eines Hydrierungskatalysators gemäß den Ansprüchen 1 bis 6, dadurch gekennzeichnet, daß man im wesentlichen folgende Schritte durchführt:
(a) in Lösung bringen des Platinmetalls des Katalysators in saurem Milieu,
(b) Neutralisieren der nach (a) erhaltenen Lösung,
(c) anschließendes Behandeln des erhaltenen Platinmetallsalzes mit feinteiligem Schwefel und
(d) nachfolgende Reduktion des behandelten Platinmetallsalzes zu metallischem Platinmetall,
wobei man vor, in oder nach Schritt (c) gewünschtenfalls ein Trägermaterial zusetzt.

## Claims

1. A hydrogenation catalyst obtainable by essentially the following steps:
(a) treating a platinum metal salt with finely divided sulfur, and
(b) then reducing the platinum metal salt to metallic platinum metal.

2. A hydrogenation catalyst as claimed in claim 1, characterized in that the particle size of the finely divided sulfur is less than 500 µm.

3. A hydrogenation catalyst as claimed in claim 1 or 2, characterized in that the reduction is carried out in the presence of a catalyst support material.

4. A hydrogenation catalyst as claimed in any of claims 1 to 3, characterized in that the process steps are carried out in an aqueous medium.

5. A hydrogenation catalyst as claimed in any of claims 1 to 4, characterized in that the treatment with finely divided sulfur is carried out in the presence of a surfactant.

6. A hydrogenation catalyst as claimed in any of claims 1 to 5, characterized in that the catalyst has a platinum metal content within the range from 0.01 to 10% by weight and a sulfur content within the range from 0.005 to 0.5% by weight.

7. A process for preparing a hydrogenation catalyst as claimed in claim 1, characterized in that it essentially comprises
(a) treating a platinum metal salt with finely divided sulfur, and
(b) then reducing the platinum metal salt to metallic platinum metal.

8. The use of the hydrogenation catalysts of any of claims 1 to 6 for preparing hydroxylammonium salts.

9. A process for preparing hydroxylammonium salts by reduction of nitrogen monoxide with hydrogen in the presence of a hydrogenation catalyst, characterized in that the hydrogenation catalyst is prepared by essentially
(a) treating a platinum metal salt with finely divided sulfur, and
(b) then reducing the platinum metal salt to metallic platinum metal.

10. A process for regenerating a hydrogenation catalyst as claimed in any of claims 1 to 6, characterized in that essentially the following steps are carried out:
(a) dissolving the platinum metal of the catalyst in an acidic medium,
(b) neutralizing the solution obtained according to (a),
(c) then treating the resulting platinum metal salt with finely divided sulfur, and
(d) subsequently reducing the treated platinum metal salt to metallic platinum metal,
with or without addition of a support material before, in or after step (c).

## Revendications

1. Catalyseur d'hydrogénation, que l'on peut obtenir essentiellement par les étapes suivantes :
(a) traitement d'un sel de métal platine par du soufre finement divisé, et
(b) réduction subséquente du sel de métal platine en métal platine métallique.

2. Catalyseur d'hydrogénation suivant la revendication 1, caractérisé en ce que le calibre des particules du soufre finement divisé est inférieur à 500 µm.

3. Catalyseur d'hydrogénation suivant la revendication 1 ou 2, caractérisé en ce que l'on entreprend la réduction en présence d'une matière de support du catalyseur.

4. Catalyseur d'hydrogénation suivant l'une quelconque des revendications 1 à 3, caractérisé en ce que l'on entreprend les étapes opératoires en milieu aqueux.

5. Catalyseur d'hydrogénation suivant l'une quelconque des revendications 1 à 4, caractérisé en ce que l'on réalise le traitement par le soufre finement divisé en présence d'un agent tensioactif ou surfactif.

6. Catalyseur d'hydrogénation suivant l'une quelconque des revendications 1 à 5, caractérisé en ce que le catalyseur présente une teneur en métal platine qui varie de 0,01 à 10% en poids et une teneur en soufre qui varie de 0,005 à 0,5% en poids.

7. Procédé de préparation d'un catalyseur d'hydrogénation suivant la revendication 1, caractérisé en ce que, pour l'essentiel,
(a) on traite un sel de métal platine par du soufre finement divisé, et
(b) on réduit ensuite le sel de métal platine en métal platine métallique.

8. Utilisation des catalyseurs suivant l'une quelconque des revendications 1 à 6 pour la préparation de sels d'hydroxylammonium.

9. Procédé de préparation de sels d'hydroxylammonium par la réduction du monooxyde d'azote avec de l'hydrogène en présence d'un catalyseur d'hydrogénation, caractérisé en ce que l'on prépare le catalyseur d'hydrogénation essentiellement par
(a) traitement d'un sel de métal platine par du soufre finement divisé, et
(b) réduction subséquente du sel de métal platine en métal platine métallique.

10. Procédé de régénération d'un catalyseur d'hydrogénation suivant l'une quelconque des revendications 1 à 6, caractérisé en ce que l'on entreprend essentiellement les étapes suivantes :
(a) mise en solution du métal platine du catalyseur dans un milieu acide,
(b) neutralisation de la solution obtenue en (a),
(c) traitement subséquent du sel de métal platine obtenu par du soufre finement divisé, et
(d) réduction subséquente du sel de métal platine traité en métal platine métallique,
où avant, pendant ou après l'étape (c), on ajoute une matière de support, si cela se révèle souhaitable.
